# EUROPÄISCHE PATENTSCHRIFT

(11) **EP 1 067 312 B1**
(45) Veröffentlichungstag und Bekanntmachung des Hinweises auf die Patenterteilung: **12.12.2001**
(21) Anmeldenummer: 00114205.8
(22) Anmeldetag: 03.07.2000
(51) Int. Cl.: F16H 3/091, F16H 3/093

(54) **6-Gang-Schaltgetriebe für Kraftfahrzeuge**
Six speed transmission for motor vehicles
Transmission à six rapports pour véhicules automobiles

(30) Priorität: 05.07.1999 EP 99112927
(43) Veröffentlichungstag der Anmeldung: 10.01.2001
(73) Patentinhaber: Ford Global Technologies, Inc., A subsidiary of Ford Motor Company, Dearborn, Michigan 48126 (US)
(72) Erfinder: Bungart, Stephan, 42855 Remscheid (DE); Dahl, Peter, 51515 Kuerten (DE); Hegerath, Andreas, 50126 Bergheim (DE); Chazotte, Jean-Pierre, 50996 Köln (DE); Eggert, Ulrich, 41751 Viersen (DE); Nett, Hans Peter, 53518 Adenau (DE)
(74) Vertreter: Messulam, Alec Moses

(56) Entgegenhaltungen:
- EP-A- 0 046 373
- EP-A- 0 083 747
- DE-A- 19 524 233
- DE-A- 19 624 857
- US-A- 5 025 674
- US-A- 5 311 789

## Beschreibung

Die Erfindung betrifft ein 6-Gang Schaltgetriebe für Kraftfahrzeuge mit einer bzw. zwei Getriebeeingangswellen, auf denen Gangzahnräder drehstarr angeordnet sind, mit einer ersten Zwischenwelle, auf der mit den Gangzahnrädern kämmende Losräder für die Gänge 1 bis 4 und ein drehstarr verbundenes Abtriebszahnrad angeordnet sind, mit einer zweiten Zwischenwelle, auf der mit den Gangzahnrädern kämmende Losräder für die Gänge 5 und 6, ein Losrad für den Rückwärtsgang R und ein drehstarr verbundenes Abtriebszahnrad angeordnet sind bei einer Reihenfolge der Losräder von R - 5 - 6, mit Schaltvorrichtungen zur drehstarren Verbindung der Losräder mit den Zwischenwellen, und mit einer Getriebeausgangswelle mit einem Ringzahnrad, welches mit den beiden Abtriebszahnrädem der beiden Zwischenwellen in getrieblicher Verbindung steht.

Ein Schaltgetriebe in einem Kraftfahrzeug kann auf verschiedene Weise in den Varianten manuelles Handschaltgetriebe, automatisiertes Handschaltgetriebe oder Lastschaltgetriebe ausgeführt sein. In allen Fällen ist eine unterschiedliche Anordnung der Getriebezahnräder in Verbindung mit den Schaltvorrichtungen notwendig, um die speziellen Erfordernisse an die Schaltbarkeit zu erfüllen. Für den Aufbau der drei Varianten aus einem Basisgetriebe ist es erstrebenswert, mittels eines modularen Getriebekonzeptes die unterschiedlichen Getriebevarianten mit geringem zusätzlichem Aufwand zu realisieren.

Aus der gattungsgemäßen EP 0 046 373 A1 ist ein Getriebekonzept für ein 6-Gang-Vorgelege-Wechselgetriebe für Kraftfahrzeuge bekannt, das zumindest eine Eingangswelle und zumindest zwei parallel hierzu angeordnete Vorgelegewellen aufweist, die jeweils mit einem Ritzel versehen sind, das in Eingriff mit einem Endabtriebszahnrad steht. Auf der Eingangswelle sind hierbei Festräder angeordnet, die in ständigem Eingriff mit Losrädem auf den Vorgelegewellen stehen benachbart denen einfache bzw. doppelte Synchronisiereinheiten vorgesehen sind, über die sie mit ihren entsprechenden Wellen treibend verbindbar sind.

Das Getriebekonzept für das 6-Gang-Vorgelege-Wechselgetriebe ist hierbei unter Beibehaltung möglichst vieler gleicher Bauteile als eine manuell betätigte Handschaltversion und als eine hilfskraftbetätigte Lastschaltversion zu realisieren.

Das bekannte Getriebekonzept für ein 6-Gang-Vorgelege-Wechselgetriebe weist den Nachteil auf, dass die Anordnung der aufeinanderfolgenden Gänge so getroffen ist, dass einer doppelten Synchronisiereinheit nicht zwei aufeinanderfolgende Gänge sondern jeweils der einem Gang folgende übernächste Gang zugeordnet ist, so dass durch eine entsprechende Vorwahl und einem Kupplungswechsel die Gangwechsel lastschaltend durchführbar sind.

Das bringt bei der manuell schaltbaren Handschaltversion den Nachteil mit sich, dass eine Schaltung über ein einfaches Schalthebelgestänge über eine Schaltkulisse in der üblichen Doppel-H-Schaltkulisse nicht möglich ist.

Aus der EP 0 083 747 B1 ist ein Getriebekonzept für ein 6-Gang-Vorgelege-Wechselgetriebe für Kraftfahrzeuge bekannt, das von vomeherein nur als eine hilfskraftbetätigte Lastschaltversion mit einer entsprechenden Doppelkupplung und einer doppelten, aus einer Zentral- und einer Hohlwelle bestehenden Eingangswellenanordnung besteht. Auch hier sind die Festräder wieder auf den Eingangswellen angeordnet und stehen in ständigem Eingriff mit entsprechenden Losrädern auf den Vorgelegewellen, benachbart denen einfache bzw. doppelte Synchronisiereinheiten angeordnet sind, mit denen sie selektiv mit ihren entsprechenden Wellen treibend verbindbar sind. Die Vorgelegewellen weisen jeweils ein Ritzel auf, das in Eingriff mit einem Endabtriebszahnrad steht.

Sowohl bei dem Getriebekonzept nach der EP 0 046 373 A1 als auch nach der EP 0 083 747 B1 wird jeweils eines oder mehrere der Festräder zur Bildung zweier verschiedener Gänge herangezogen, wodurch die Baulänge des Wechselgetriebes kurz gehalten werden kann.

Ein 6-Gang-Getriebe mit einer Anordnung der Getriebezahnräder ähnlich dem Oberbegriff ist aus der DE 196 24 857 bekannt. Es umfaßt eine Getriebeeingangswelle, zwei Zwischenwellen, eine Getriebeabtriebswelle sowie darauf angeordnete Ganzahnräder und Schiebemuffen. Ein gemeinsames Antriebszahnrad für den vierten und sechsten Gang ist am Ende der Getriebeeingangswelle angeordnet. Die Losräder für den ersten bis vierten Gang sind auf der ersten Zwischenwelle schaltbar angeordnet, die Lösräder für den fünften, sechsten und den Rückwärts-Gang sind auf der zweiten Zwischenwelle schaltbar angeordnet. Wesentliches Entwicklungsziel ist hier eine kurze Baulänge, aufgrund der vorgegebenen Getriebezahnräderanordnung ist deshalb im wesentlichen eine manuelle Version des Getriebes vorgesehen. Die Anordnung der Losräder auf den beiden Zwischenwellen erlaubt jedoch mit geringem Aufwand den Aufbau eines modularen Getriebekonzeptes.

Aufgabe dieser Erfindung ist es, ein 6-Ganggetriebe kompakter Bauart vorzustellen, das in den Getriebevarianten Handschaltgetriebe, automatisiertes Handschaltgetriebe und Lastschaltgetriebe bei der Verwendung möglichst vieler Gleichteile realisiert werden kann.

Erfindungsgemäß wird die Aufgabe dadurch gelöst, daß die Losräder für die Gänge 2 und 3 auf der ersten Zwischenwelle gegeneinander austauschbar sind und entweder in der Reihenfolge 1 - 2 - 3 - 4 oder in der Reihenfolge 1 - 3 - 2 - 4 angeordnet werden können, und das Losrad für den 5. Gang auf der zweiten Zwischenwelle mit der Schiebeverzahnung nach rechts für den Eingriff in die Schaltvorrichtung in der Schaltanordnung 5 - R oder nach links für den Eingriff in die Schaltvorrichtung in der Schaltanordnung 5 - 6 angeordnet werden kann.

Damit lassen sich alle drei Getriebevarianten mit den gleichen Zwischenwellen, den gleichen Losräder und den gleichen Schaltvorrichtungen realisieren, was einem sehr hohen Anteil an Gleichteilen entspricht. Die Anpassung an die benötigten Schaltfolgen der Getriebevarianten wird über den unterschiedlichen Eingriff der Losräder für den zweiten, dritten und fünften Gang in die Schaltvorrichtungen erreicht. Die wichtigsten Nichtgleichteile für die unterschiedlichen Getriebevarianten sind, neben den hier nicht besprochenen Kupplungsbaugruppen, die Eingangswellen und die an die Kupplungen anzupassenden Getriebegehäuse.

Die Losräder für den zweiten und dritten Gang sind bezüglich der Abmessungen und der Ausführung der Schaltverzahnung identisch, sie unterscheiden sich hauptsächlich in den Abmessungen ihrer Verzahnungen, augenmerklich vor allem am unterschiedlichen Kopfkreisdurchmesser. Damit die beiden Losräder einfach gegeneinander ausgetauscht werden können, weisen beide den gleichen Innendurchmesser der Zwischenwellenbohrung und vorzugsweise die gleiche Gesamtbreite auf. Damit können die Losräder entweder in der Reihenfolge 1 -2 -3 - 4 oder in der Reihenfolge 1 - 3 - 2 - 4 angeordnet und durch gleiche Anlaufscheiben gesichert werden. Die erste Zwischenwelle weist, analog zu dem gleichen Innendurchmesser der beiden Losräder im Bereich der beiden Losräder einen konstanten Außendurchmesser und im Bereich zwischen den beiden Lösrädern eine Einrichtung zur Aufnahme einer Anlaufscheibe, vorzugsweise eine Nut, auf.

Nicht hinderlich für dieses Konzept der vertauschbaren zweiten und dritten Losräder ist es, wenn die erste Zwischenwelle im Bereich der beiden Losräder einen geringfügig unterschiedlichen Außendurchmesser im Bereich von zweitem und drittem Losrad aufweist. Die Anpassung kann, wenn beide Losräder mit dem geringeren Innendurchmesser gefertigt werden, durch Ausbohren desjenigen Losrades erfolgen, welches auf dem größeren Außendurchmesser der Zwischenwelle angeordnet ist oder sie kann erfolgen durch die Anpassung der Durchmesser der Nadellagerrollen, die zwischen Losrädern und Zwischenwellen angeordnet sind. Wichtig dabei ist, dass die Abmessungen der Schaltverzahnungen identisch sind.

Die zweite Zwischenwelle und die beiden auf der zweiten Zwischenwelle angeordneten Schaltvorrichtungen für den sechsten Gang und den Rückwärtsgang sind so ausgeführt, daß das Losrad des fünften Ganges entweder als Schaltpaar 5./6. wie für ein Handschaltgetriebe mit Doppel-H-Kulisse oder mit jeweils einzeln geschaltetem 5. und 6. Gang für die automatisierte Handschaltversion und/oder die Lastschaltversion ausgeführt werden kann. Im letzteren Fall kann der 5. Gang zusammen mit dem Rückwärtsgang ein Schaltpaar 5./R bilden. Dazu weisen beide Schaltvorrichtungen auf der zweiten Zwischenwelle eine identische Schaltverzahnung auf. Das fünfte Losrad wird je nach Getriebevariante mit seiner Verzahnung in Richtung entweder der ersten oder der zweiten Schaltvorrichtung montiert.

Eine vorteilhafte Ausgestaltung der Erfindung sieht vor, dass die Losräder für den 4. und den 6. Gang 36 mit demselben Gangzahnrad der Getriebeeingangswelle kämmen. Damit wird ein festes Gangzahnrad am motorabgewandten Ende der Getriebeeingangswelle gespart, was die Baulänge des Getriebes und den Bauaufwand reduziert. Die Abstimmung der Wellenabstände zwischen Eingangswelle und Zwischenwellen und dem Wälzkreisdurchmesser des Gangzahnrades ermöglicht ein beliebiges Übersetzungsverhältnis zwischen 4. und 6. Gang im Rahmen der Getriebeabstufung.

Als manuelles Schaltgetriebe weist das 6-Gang-Schaltgetriebe eine Getriebeeingangswelle mit einer Anordnung der Ganzahnräder von - motorseitig gesehen - 1., 2., 5., 3., 4./6. Gang auf. Auf der ersten Zwischenwelle sind die Losräder zu den beiden Schaltpaaren 1./2. Gang und 3./4. Gang zusammengefasst. Auf der zweiten Zwischenwelle ist das Schaltpaar 5./6. Gang und der einzeln geschaltete Rückwärtsgang angeordnet. Diese Schaltpaarung entspricht den Anforderungen an eine gute Schaltbarkeit der einzelnen Gänge bei einer Doppel-H-Schaltkulisse, indem in der Betätigungseinrichtung jeweils 1./2., 3./4. und 5./6. Gang eine Schaltgasse bilden. Der Rückwärtsgang wird unabhängig von den Vorwärtsgängen betätigt.

Als automatisiertes Handschaltgetriebe weist das 6-Gang-Schaltgetriebe eine geänderte Getriebeeingangswelle mit einer Anordnung der Ganzahnräder von - motorseitig gesehen - 1., 3., 5., 2., 4./6. Gang auf. Auf der ersten Zwischenwelle sind die Losräder zu den beiden Schaltpaaren 1./3. Gang und 2./4. Gang zusammengefasst. Auf der zweiten Zwischenwelle ist das Schaltpaar 5./R Gang und der einzeln geschaltete 6. Gang angeordnet. Diese Ganganordnung entspricht den Anforderungen an die automatisierte Getriebebetätigung, wonach benachbarte Gänge möglichst gleichzeitig betätigt werden, um die Schaltzeiten so kurz wie möglich zu gestalten.

Als Lastschaltgetriebe benötigt das 6-Gang-Schaltgetriebe eine Doppelkupplung und weist dementsprechend zwei Getriebeeingangswellen auf mit der Anordnung der festen Gangzahnrädem der ungeraden Gänge - jeweils motorseitig gesehen - von 1., 3. und 5. Gang auf der ersten Eingangswelle und der geraden Gänge von 2., 4. und 6. Gang auf der zweiten Eingangswelle. Die Schaltpaaranordnung ist 1./3. Gang und 2./4. Gang auf der ersten Zwischenwelle und 5./R Gang auf der zweiten Zwischenwelle, der 6. Gang auf der zweiten Zwischenwelle wird wie bei der automatisierten Version einzeln geschaltet. Bei dieser Anordnung von Gangzahnrädem und Schaltpaaren liegen benachbarte Gänge immer auf verschiedenen Getriebeeingangswellen und verschiedenen Schaltpaaren. Somit kann der in der Schaltfolge nächst höhere Gang vorgewählt werden, solange der niedrigere noch im Eingriff ist. Die ruckfreie Drehmomentübertragung während des Schaltvorganges wird über die geeignete Steuerung der auf beiden Getriebeeingangswellen vorhandenen Kupplungen erreicht.

Eine vorteilhafte Ausgestaltung der Erfindung sieht vor, daß das auf der zweiten Zwischenwelle angeordnete Losrad des Rückwärtsganges mit einem Zwischenzahnrad kämmt, welches auf der ersten Zwischenwelle angeordnet und drehstarr mit dem Losrad des 1. Ganges verbunden ist. Bei dieser Anordnung entfällt eine zusätzliche Zwischenwelle für den Rückwärtsgang.

Weitere vorteilhafte Ausgestaltungen der Erfindung können den folgenden Zeichnungen entnommen werden. Es zeigen:
- Fig. 1: eine schematisierte Darstellung eines erfindungsgemäßen Handschaltgetriebes;
- Fig. 2: die schematisierte Darstellung eines erfindungsgemäßen automatisierten Handschaltgetriebes;
- Fig. 3: die schematisierte Darstellung eines erfindungsgemäßen Lastschaltgetriebes;
- Fig. 4: einen Querschnitt durch ein Handschaltgetriebe;
- Fig. 5: einen Querschnitt durch ein automatisiertes Handschaltgetriebe; und
- Fig. 6: einen Querschnitt durch ein Lastschaltgetriebe.

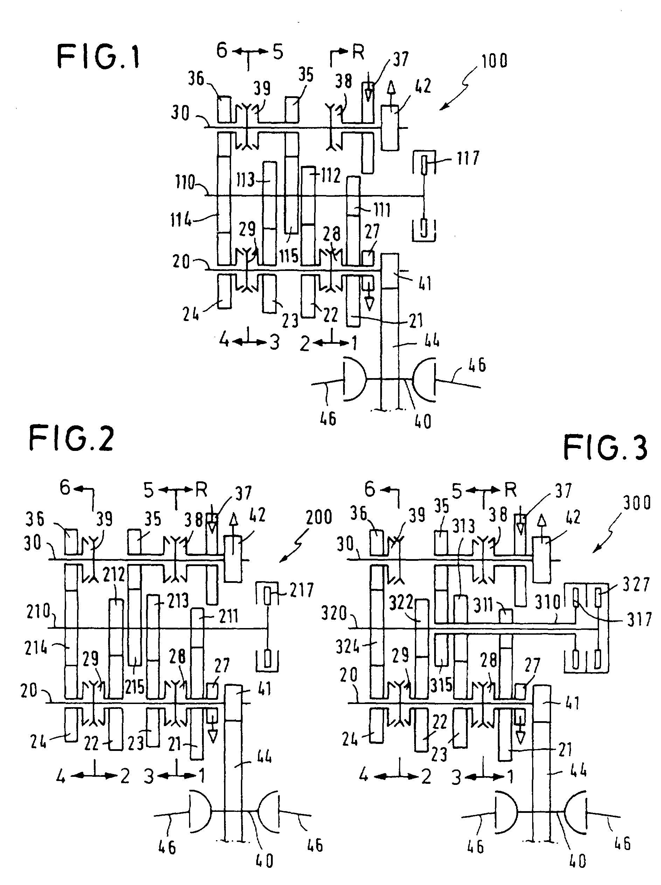

In Fig. 1 ist die Handschaltversion 100 des 6-Gang-Getriebes schematisch dargestellt. Die Eingangswelle 110 ist über die Kupplung 117 mit dem nicht dargestellten Motor verbunden. Auf der Eingangswelle 110 sind die Gangzahnräder 111 bis 115 für die Gänge 1 bis 6 drehstarr angeordnet. Auf der ersten Zwischenwelle 20 befinden sich die Losräder 21 bis 24 für die Gänge 1 bis 4, die über die Schaltvorrichtungen 28 und 29 drehstarr mit der ersten Zwischenwelle 20 schaltbar sind. Auf der zweiten Zwischenwelle 30 befinden sich die Losräder 35 und 36 für die Gänge 5 und 6 sowie das Losrad 37 für den Rückwärtsgang, wobei alle Losräder ebenfalls über die Schaltvorrichtungen 38 und 39 drehstarr mit der zweiten Zwischenwelle 30 schaltbar sind.

Motorseitig gesehen ist die Anordnung der Gangzahnräder auf der Eingangswelle 110 wie folgt: Gangzahnrad 111, welches mit Losrad 21 kämmt, dann Gangzahnrad 112, welches mit Losrad 22 kämmt, dann Gangzahnrad 115, welches mit Losrad 35 kämmt, dann Gangzahnrad 113, welches mit dem Losrad 23 kämmt und am Ende der Eingangswelle das Gangzahnrad 114, das sowohl mit dem Losrad 24 für den 4. Gang als auch mit dem Losrad 36 für den 6. Gang kämmt. Aus dieser Anordnung der Gangzahnräder ergeben sich Schaltpaare der Losräder, die jeweils über eine gemeinsame Schaltvorrichtung geschaltet werden. Losrad 21 und 22 für den 1. und 2. Gang sind über die Schaltvorrichtung 28 drehstarr mit der ersten Zwischenwelle 20 verbindbar, Losrad 23 und 24 für den 3. und 4. Gang sind über die Schaltvorrichtung 29 drehstarr mit der ersten Zwischenwelle 20 verbindbar und Losrad 35 und 36 für den 5. und 6. Gang sind über die Schaltvorrichtung 39 drehstarr mit der zweiten Zwischenwelle 30 verbindbar.

Erste und zweite Zwischenwelle 20 und 30 weisen am motorseitigen Ende drehstarr angeordnete Abtriebszahnräder 41 und 42 auf, die beide mit einem Ringzahnrad 44 der Abtriebswelle 40, welche die Antriebskraft über die Achsabtriebswellen 46 auf die Räder leitet.

Für den Rückwärtsgang ist auf der ersten Zwischenwelle 20 ein Zwischenzahnrad 27 lose angeordnet, welches drehstarr mit dem Loszahnrad 21 des 1. Ganges verbunden ist. Dadurch befindet sich das Zwischenzahnrad 27 indirekt über das Losrad 21 ständig im Eingriff mit der Eingangswelle 110. Das Zwischenzahnrad 27 kämmt mit dem Losrad 37 für den Rückwärtsgang, welches auf der zweiten Zwischenwelle 30 angeordnet ist und über die Schaltvorrichtung 38 mit dieser drehstarr verbindbar ist. Durch diese Anordnung wird die Funktion der für den Rückwärtsgang notwendigen Zwischenwelle durch die erste Zwischenwelle 20 erfüllt, indem die beiden verbundenen Zahnräder, Losrad 21 und Zwischenzahnrad 27, im Rückwärtsgang lose auf der ersten Zwischenwelle laufen.

Fig. 2 zeigt die automatisierte Handschaltversion 200 des 6-Gang-Getriebes. Über die automatisch betätigte Kupplung 217 wird die Eingangswelle 210 vom nicht dargestellten Motor angetrieben. Gegenüber der manuellen Handschaltversion 100 ist auf der Eingangswelle 210 die Anordnung der Gangzahnräder 211 bis 215 geändert. Vom Motor aus gesehen ergibt sich folgende Reihenfolge: Zuerst Gangzahnrad 211 für den 1. Gang, dann 213 für den 3. Gang, dann 215 für den 5. Gang, dann 212 für den 2. Gang und am Wellenende 214 für den 4. und 6. Gang.

Entsprechend der Anordnung der Gangzahnräder auf der Eingangswelle 210 werden auf der ersten Zwischenwelle 20 die Losräder 22 und 23 für den 2. und 3. Gang gegeneinander vertauscht, auf der zweiten Zwischenwelle 30 wird das Losrad 35 spiegelbildlich gedreht. Damit ergeben sich folgende neue Schaltpaare: Auf der ersten Zwischenwelle 20 die Losräder 21 und 23 für den 1. und 3. Gang, die mit der Schaltvorrichtung 28 geschaltet werden, und die Losräder 22 und 24 für den 2. und 4. Gang, die mit der Schaltvorrichtung 29 geschaltet werden. Auf der zweiten Zwischenwelle 30 die Losräder 35 und 37 für den 5. Gang und den Rückwärtsgang, die mit der Schaltvorrichtung 38 geschaltet werden sowie das Losrad 36 für den 6. Gang, das jetzt getrennt vom 5. Gang alleine mittels der Schaltvorrichtung 39 geschaltet wird.

Diese Anordnung der Schaltpaare, bei der keine benachbarten Gänge einem Schaltpaar zugeordnet sind, entspricht den Anforderungen an ein automatisiertes Handschaltgetriebe im Hinblick auf möglichst kurze Schaltvorgänge. Sobald die Kupplung 217 öffnet, kann bereits der benachbarte Gang ansynchronisiert werden, ohne dass der ursprüngliche Gang vorher ausgerückt werden muss. Erreicht wird diese Anpassung im wesentlichen durch die geänderte Eingangswelle 210. Die neue Anordnung der Losräder 22, 23 auf der ersten Zwischenwelle 20 und Losrad 35 auf der zweiten Zwischenwelle 30 bedeutet keinen höheren Fertigungsaufwand, sondern lediglich einen anderen Montageablauf.

Die Lastschaltversion des 6-Gang-Getriebes ist schematisch in Fig. 3 dargestellt. Für das Lastschaltgetriebe 300 werden zwei Kupplungen 317 und 327 mit zwei jeweils korrespondierenden Eingangswellen 310 und 320 benötigt. Auf der ersten Eingangswelle 310 sind die Gangzahnräder 311, 313 und 315 für den 1., den 3. und den 5. Gang in dieser Reihenfolge, vom Motor aus gesehen, angeordnet. Auf der zweiten Eingangswelle 320 sind die Gangzahnräder 322 für den 2. Gang und 324 für den 4. und 6. Gang angeordnet.

Die Anordnung der Losräder auf den beiden Zwischenwellen ist die gleiche wie in der automatisierten Version 200. Die Losräder 21, 23 für den 1. und 3. Gang bilden ein Gangpaar, schaltbar durch Schaltvorrichtung 28, die Losräder 22 und 24 für den 2. und 4. Gang bilden ein Gangpaar, schaltbar durch die Schaltvorrichtung 29, die Losräder 35 und 37 für den 5. und den Rückwärtsgang bilden ein Gangpaar, schaltbar durch die Schaltvorrichtung 38, und das Losrad 36 wird einzeln durch die Schaltvorrichtung 39 geschaltet.

Diese Anordnung der Gangzahnräder auf den Eingangswellen und der Losräder auf den Zwischenwellen erfüllt die Anforderung an ein Lastschaltgetriebe, beim Schaltvorgang den nächsthöheren Gang mittels Schaltvorrichtung einzurücken und durch die Kupplungssteuerung das Drehmoment ohne Zugkraftunterbrechung an den nächsten Gang zu übergeben. Wesentliche Änderung gegenüber dem automatisierten Handschaltgetriebe 200 sind die zwei benötigten Eingangswellen mit den entsprechenden Gangzahnrädern. Dagegen sind die Betätigungseinrichtungen und die Zwischenwellen im wesentlichen gleich wie beim automatisierten Handschaltgetriebe 200.

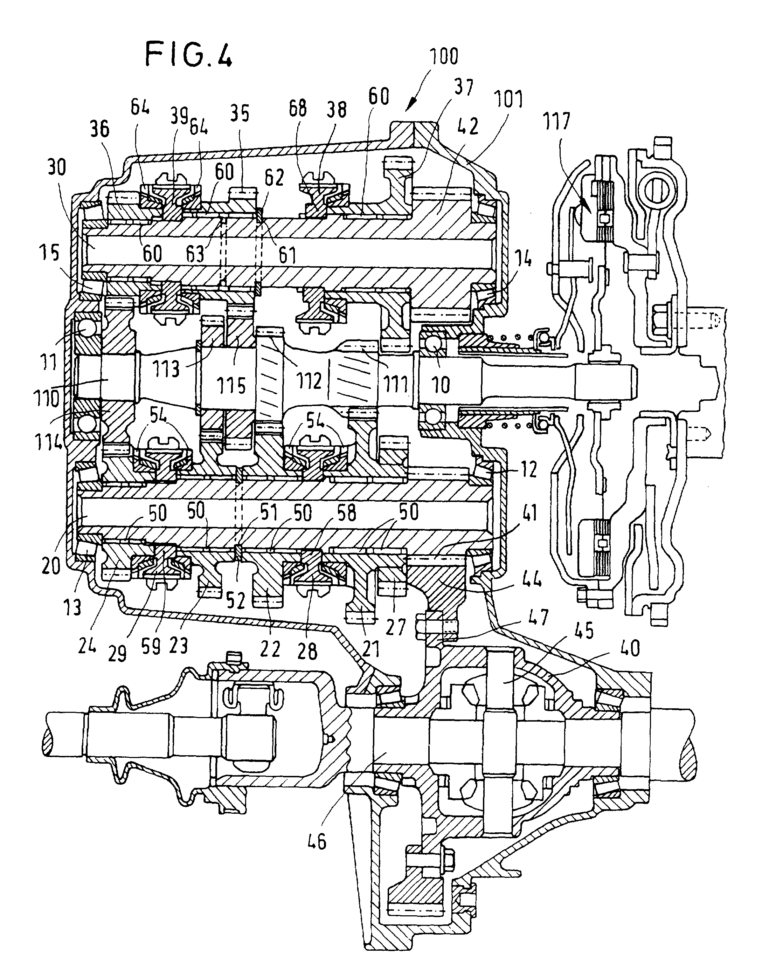

Einen Querschnitt durch eine erfindungsgemäße Ausführung der Handschaltversion 100 des 6-Gang-Getriebes ist in Fig. 4 gezeigt. Die Eingangswelle 110 ist über die Kupplung 117 mit dem nicht dargestellten Motor treibend verbunden und über die Kugellager 10 und 11 im Getriebegehäuse 101 gelagert. Auf der Eingangswelle 110 sind die Gangzahnräder 111 bis 115 für die Gänge 1 bis 6 fest angeordnet, wobei die Gangzahnräder für den 1. Gang 111 und den 2. Gang 112 aus der Eingangswelle gefertigt sind, während die Gangzahnräder für die Gänge 3 bis 6 (113, 114, 115) auf die Eingangswelle 110 aufgeschoben sind. Dabei kämmt das Gangzahnrad 114 am Ende der Eingangswelle 110 mit den Losrädem der Gänge 4 und 6.

Die erste Zwischenwelle 20 ist mit den Kegellagern 12 und 13 im Getriebegehäuse 101 gelagert. Auf der ersten Zwischenwelle 20 befinden sich die Losräder 21 bis 24 für die Gänge 1 bis 4, die über die Nadellager 50 auf der Zwischenwelle frei drehbar gelagert sind. Mittels der Schaltvorrichtungen 28 und 29 sind die Losräder drehstarr mit der ersten Zwischenwelle 20 schaltbar, wobei alle Losräder die gleiche Schaltverzahnung 54 aufweisen. Mit dem Losrad 21 des 1. Ganges ist das Zwischenzahnrad 27 für den Rückwärtsgang drehfest verbunden. Wenn der Rückwärtsgang geschaltet wird, drehen sich die beiden Zahnräder auf der ersten Zwischenwelle 20, die dabei die Funktion einer Achse hat. Vorne auf der Eingangswelle 20 ist - motorseitig gesehen - das feste Abtriebszahnrad 41 angeordnet, dass zusammen mit der Eingangwelle 20 aus einem Stück gefertigt ist.

Das Loszahnrad des 1. Ganges 21 mit dem aufgeflanschtem Zwischenzahnrad 27 läuft, in Axialrichtung gesehen, auf der Motorseite gegen das Abtriebszahnrad 41, auf der gegenüberliegenden Seite gegen den inneren Ring 58 der Schaltvorrichtung 28, welcher drehfest und unverschiebbar auf der Zwischenwelle 20 angeordnet ist. Das Loszahnrad 22 des 2. Ganges läuft motorseitig gegen diesen Ring 58, auf der motorabgewandt gegen die Anlaufscheibe 52, welche in der Nut 51 auf der Zwischenwelle 20 fixiert ist. Die axiale Lagerung der Losräder für den 3. und 4. Gang erfolgt ähnlich, indem das Losrad des 3. Ganges 23 motorseitig gegen die Anlaufscheibe 52 läuft, auf der gegenüberliegenden Seite gegen den inneren Ring 59 der Schaltvorrichtung 29, der ebenfalls fest auf der Zwischenwelle 20 sitzt. Das Losrad des 4. Ganges 24 läuft motorseitig gegen diesen inneren Ring 59 und auf der anderen Seite gegen den auf der Zwischenwelle 20 festsitzenden Innenring des Kegellagers 13.

Diese Anordnung der axialen Lagerung erlaubt die einfache Vertauschbarkeit der beiden Losräder des 2. und 3. Ganges 22 und 23, die für die Modularität des Getriebekonzeptes benötigt wird. Da die beiden Losräder gleiche Nabenbreite, gleiche Innendurchmesser und gleiche Schaltverzahnungen 54 aufweisen, kann je nach Getriebeversion entweder das 2. Gang- Losrad 22 oder das 3. Gang-Losrad 23 zuerst auf die Zwischenwelle montiert werden, ohne das sonstige bauliche Änderungen notwendig sind. Nicht hinderlich ist dabei, wenn Losrad 22 und Losrad 23 geringfügig unterschiedliche Innendurchmesser und/oder Baubreiten aufweisen. Dies kann angepasst werden durch: Erstens einfaches Nacharbeiten der Losräder, z. B. durch Aufbohren des Innendurchmessers und/oder Abdrehen der Anlaufflächen, zweitens durch Anpassung mittels Nadellagerrollen unterschiedlichen Durchmessers, die den Innendurchmesser ausgleichen, und/oder verschieden dicker Anlaufscheiben, die die Baubreite ausgleichen.

Die zweite Zwischenwelle 30 ist mit den Kegellagern 14 und 15 im Getriebegehäuse 101 gelagert. Über die Nadellager 60 sind die Losräder 35 und 36 für die Gänge 5 und 6 sowie das Losrad (37) für den Rückwärtsgang drehbar auf der Zwischenwelle 30 angeordnet, wobei alle Losräder über die Schaltvorrichtungen 38 und 39 drehstarr mit der Zwischenwelle 30 schaltbar sind. Dazu weisen die drei Losräder die gleichen Schaltverzahnungen 64 auf. Wie bei der ersten Zwischenwelle 20 ist auch bei der zweiten Zwischenwelle 30 vorne - motorseitig gesehen - ein Zahnrad mit angefertigt, das feste Abtriebszahnrad 42.

Axial ist das Rückwärtsgang-Losrad 37 motorseitig über das feste Abtriebszahnrad 42, auf der anderen Seite über den inneren Ring 68 der Schaltvorrichtung 38, der auf der Zwischenwelle 30 drehfest und unverschieblich angeordnet ist, gelagert. Das Losrad des 5. Ganges 35 läuft motorseitig gegen die Anlaufscheibe 62, die in der umlaufenden Nut 61 auf der Zwischenwelle 30 axial festgelegt ist. Eine zweite Nut 63 mit den gleichen Abmessungen wie die Nut 61 erlaubt die Anbringung der Anlaufscheibe 62 in einer Position etwas entfernter vom Motor. Diese zweite Nut 63 wird gebraucht für die automatisierte und die Lastschalt-Version des 6-Ganggetriebes. Die Anlaufscheibe wird bei diesen Versionen in der Nut 63 angebracht und sichert somit das 5. Gang-Losrad 35 in axialer Richtung, wenn dieses in der spiegelbildlichen Position, d. h. die Schaltverzahnung 64 befindet sich mit der Schaltvorrichtung 38 im Eingriff, auf der Eingangswelle 30 angeordnet ist.

Die beiden Abtriebszahnräder 41 und 42 stehen mit dem Ringzahnrad 44, welches über den Schraubflansch 47 mit der Abtriebswelle 40 verbunden ist, in getrieblicher Verbindung. In der Abtriebswelle 40 ist das Differentialgetriebe 45 angeordnet, welches die Antriebskraft auf die beiden Achsabtriebswellen 46 verteilt.

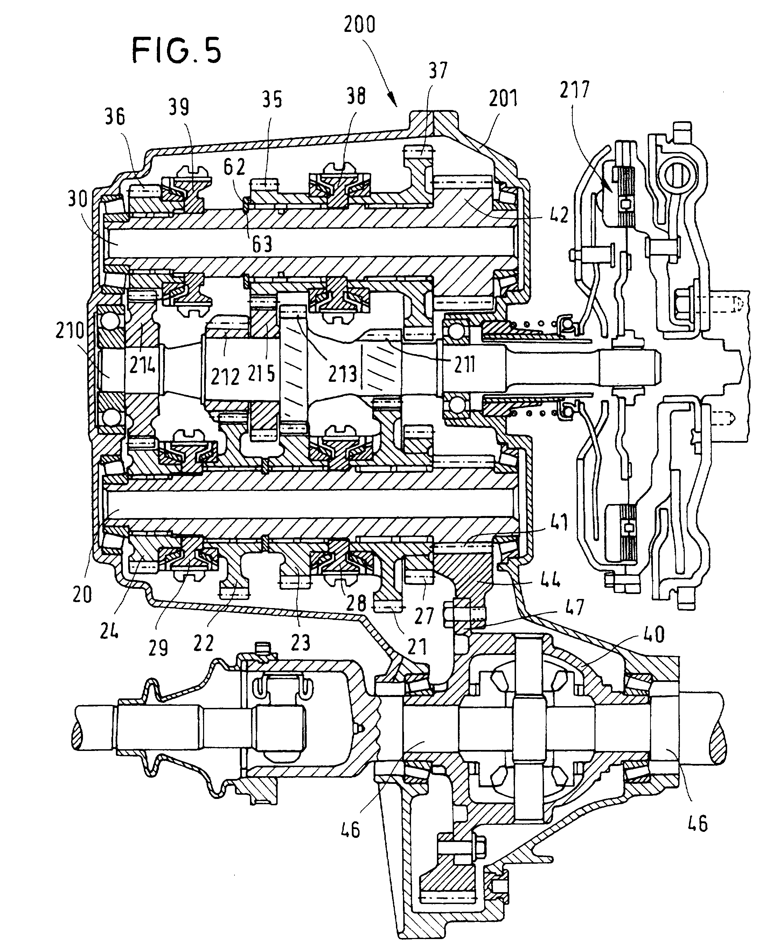

In Figur 5 ist die erfindungsgemäße Variante für ein automatisiertes Handschaltgetriebe 200 gezeigt. Über die Kupplung 217 ist die Eingangswelle 210 mit dem nicht dargestellten Motor verbunden. Die Betätigung der Kupplung 217 erfolgt bei dieser Variante über eine automatisierte Betätigungseinrichtung, die hier nicht dargestellt ist. Die Eingangswelle 210 unterscheidet sich von der Eingangswelle 110 des Handschaltgetriebes im wesentlichen durch die vertauschte Anordnung der Gangzahnräder 212 und 213 für den 2. und 3. Gang.

Die erste und zweite Zwischenwelle 20 und 30 sind gleich wie beim Handschaltgetriebe, nur die Anordnung der Losräder hat sich geändert: Auf der ersten Zwischenwelle sind die Losräder 22 und 23 des 2. und 3. Ganges vertauscht, auf der zweiten Zwischenwelle 30 ist das Losrad 35 des 5. Ganges spiegelbildlich auf der Welle angeordnet. Dazu greift die Verzahnung 64 des Losrades 35 in die Schaltvorrichtung 38, und die Anlaufscheibe 62 ist in der Nut 63 angebracht, so dass die relative Lage der Verzahnung des 5. Ganges relativ zur zweiten Zwischenwelle 30 gleich ist wie bei der Handschaltversion 100.

Auch die Achsabtriebswelle 40 ist identisch der Handschaltversion 100. Das Getriebegehäuse 201 entspricht in allen Hauptabmessungen wie Abstand der Wellen, Lage der Eingangs- und Abtriebswellen dem Getriebegehäuse 101 der Handschaltversion. Lediglich für die Anordnung der automatisierten Getriebesteuerung sind zusätzliche Aufnahmemöglichkeiten vorzusehen. Damit ergibt sich als wesentliches neues Teil des automatisierten Handschaltgetriebes nur die Eingangswelle 210.

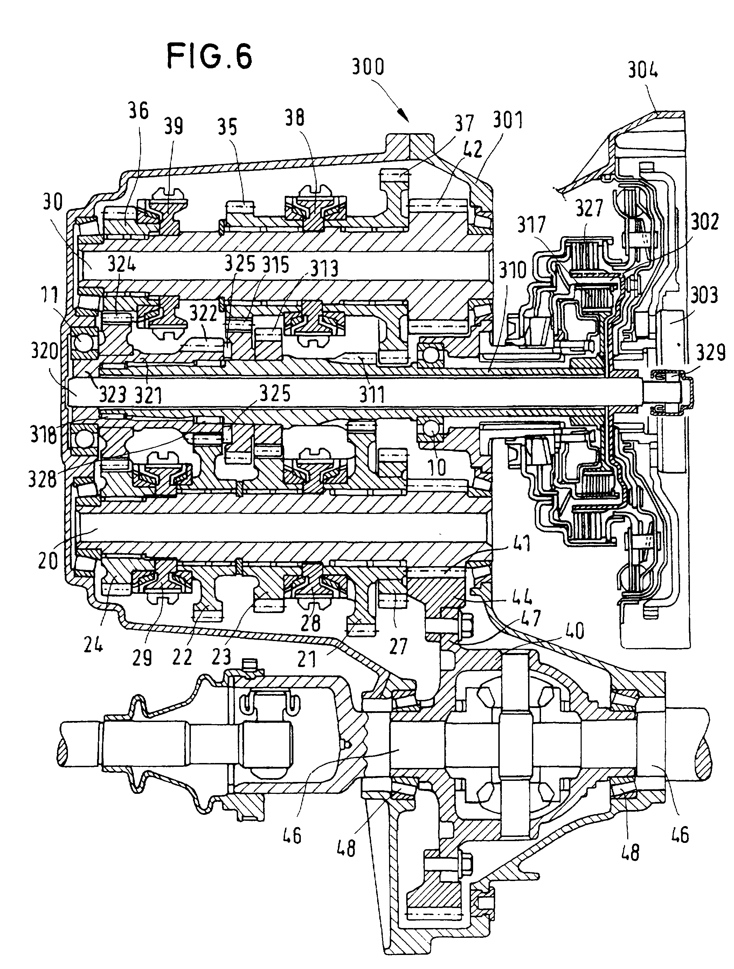

Fig. 6 schließlich zeigt einen Querschnitt durch eine Lastschaltversion 300 des erfindungsgemäßen 6-Gang-Getriebes. Während die erste und zweite Zwischenwelle 20 und 30 nebst Anordnung der Losräder gleich sind wie beim automatisierten Handschaltgetriebe 200, ist die Eingangswelle zweigeteilt. Eine erste Eingangswelle 310, als Hohlwelle ausgeführt, trägt die motorseitige Kupplung 317 und die Gangzahnräder 311, 313 und 315 für den 1., 3. und 5. Gang.

Die zweite Eingangswelle 320 wird durch die hohle erste Eingangswelle 310 geführt. Motorseitig trägt sie die Kupplung 327, die zusammen mit der Kupplung 317 der ersten Eingangswelle 310 die Doppelkupplung 302 bilden, die über den Kupplungsflansch 303 mit dem nicht dargestellten Motor treibend verbunden ist. Auf der motorabgewandten Seite sind die beiden Gangzahnräder für den 2. Gang 322 sowie für den 4./6. Gang 324 angeordnet. Das Gangzahnrad des 2. Ganges 322 ist auf der motorabgewandten Seite als Hohlwelle 321 ausgeführt, welche am Ende die Hohlwellennabe 323, die mit der zweiten Eingangswelle 320 fest verbunden ist, aufweist. Das Gangzahnrad 324 des 4./6. Ganges ist fest auf der Hohlwelle 321 angeordnet.

Gelagert ist die zweite Eingangswelle 320 motorabgewandt im Getriebegehäuse 301 mit dem Kugellager 11, motorseitig im Kupplungsflansch 303 mit dem Rollenlager 329. Die erste Eingangswelle 310 ist motorseitig mit dem Kugellager 10 im Getriebegehäuse 301, motorabgewandt mit dem Nadellager 318 im Bereich des Gangzahnrades 324 von 4./6. Gang in der Hohlwelle 321 gelagert. Diese Anordnung der motorabgewandten Lagerung ist gewählt, damit die erste Eingangswelle 310, die als Hohlwelle eine wesentlich größere Biegesteifigkeit als die durch sie hindurchgeführte zweite Eingangswelle 320 aufweist, sich möglichst nahe am Getriebegehäuse 301 bzw. dem Kugellager 11 abstützt, wodurch die Durchbiegung der Welle unter Last reduziert wird.

Das Gangzahnrad 322 des 2. Ganges benötigt durch die Anordnung am Ende der Hohlwelle 321, was bei Belastung ein große Biegeverformung bedeuten würde, eine Unterstützung im Bereich seiner Verzahnung, weshalb dort ein zusätzliches Nadellager 328 zwischen ihm und der ersten Eingangswelle 310 vorgesehen ist. Damit wird die resultierende Querkraft bei Kraftübertragung von der ersten Eingangswelle 310 getragen.

Zur Aufnahme der axialen Kraftkomponenten zwischen erster und zweiter Eingangswelle 310 und 320 ist zwischen den Gangzahnrädern des 2. Ganges 322 und des 5. Ganges 315 ein Axiallager 325 angebracht.

Gegenüber den einfachen Kupplungen 117 und 217 benötigt die größere Doppelkupplung 302 ein größere Kupplungsglocke 304 des Getriebegehäuses 301, wodurch die Gesamtlänge des Getriebes für die Lastschaltversion 300 größer ist als für das Handschaltversion 100 und die automatisierte Version 200. Damit sich, relativ zum Motor gesehen, die Position der Achsabtriebswellen 46 nicht ändert, wird die Abtriebswelle relativ zu den Zwischenwellen 20 und 30 in Motorrichtung verschoben. Dies wird erreicht, indem das Ringzahnrad 44 von der motorabgewandten Seite gegen den Schraubflansch 47 der Abtriebswelle geschraubt wird, während er bei den beiden anderen Versionen motorseitig gegen den Schraubflansch 47 geschraubt wird. Da sich dabei auch die Position der Abtriebswellenlager 48 relativ zu den Zwischenwellen 20 und 30 verschiebt, wird für die Lastschaltversion auf jeden Fall ein neues Getriebegehäuse benötigt.

Bei allen drei Versionen des 6-Gang Getriebes bleibt die Anordnung des Zwischenzahnrades 27, das fest mit dem Losrad 21 des 1. Ganges verbunden ist, und des Losrades 37 für den Rückwärtsgang unverändert.

Durch diese Erfindung können auf einfache Weise drei Varianten eines 6-Gang-Schaltgetriebes realisiert werden. Im wesentlichen anzupassen an die jeweilige Getriebeversion ist die Getriebeeingangswelle sowie das Getriebegehäuse, während die Zwischenwellen mitsamt aller Losräder und Schaltvorrichtungen sowie die Getriebeausgangswellen im wesentlichen gleich sind. Damit wird die Variantenvielfalt mit geringem Aufwand erreicht.

## Patentansprüche

1. 6-Gang Schaltgetriebe für Kraftfahrzeuge mit einer Getriebeeingangswelle bzw. zwei Getriebeeingangswellen (110, 210, 310, 320), auf der bzw. denen Gangzahnräder drehstarr angeordnet sind, mit einer ersten Zwischenwelle (20), auf der mit den Gangzahnrädern kämmende Losräder (21 - 24) für die Gänge 1 bis 4 und ein drehstarr angeordnetes Abtriebszahnrad (41) angeordnet sind, mit einer zweiten Zwischenwelle (30), auf der mit den Gangzahnrädem kämmende Losräder (35, 36) für die Gänge 5 und 6, ein Losrad (37) für den Rückwärtsgang R und ein drehstarr verbundenes Abtriebszahnrad (42) angeordnet sind bei einer Reihenfolge der Losräder von R - 5 - 6, mit Schaltvorrichtungen (28, 29, 38, 39) zur drehstarren Verbindung der Losräder mit den Zwischenwellen, und mit einer Getriebeausgangswelle (40) mit einem Ringzahnrad (44), welches mit den beiden Abtriebszahnrädern (41, 42) der beiden Zwischenwellen (20, 30) in getrieblicher Verbindung steht,
**dadurch gekennzeichnet, dass**
die Losräder (22 und 23) für den 2. Gang und den 3. Gang auf der ersten Zwischenwelle (20) gegeneinander austauschbar sind, und die zugehörigen Gangzahnräder auf der/den Getriebeeingangswelle/n entsprechend angeordnet sind, wobei die austauschbaren Losräder (22,23) die gleiche Schaltverzahnung und ähnliche Abmessungen aufweisen, wodurch die Losräder für die Gänge 1 bis 4 auf der ersten Zwischenwelle (20) entweder in der Reihenfolge 1 - 2 - 3 - 4 oder in der Reihenfolge 1 - 3 - 2 - 4 angeordnet sein können.

2. 6-Gang-Schaltgetriebe nach Anspruch 1,
**dadurch gekennzeichnet, dass**
das Losrad (35) für den 5. Gang auf der zweiten Zwischenwelle (30) mit einer Schiebeverzahnung (64) zum Losrad des Rückwärtsganges (37) hin in einer Schaltvorrichtung (38) als Schaltpaar 5./ R oder nach links zum Losrad (36) des 6. Ganges hin in einer Schaltvorrichtung (39) als Schaltpaar 5./6. angeordnet sein kann.

3. 6-Gang-Schaltgetriebe nach Anspruch 1,
**dadurch gekennzeichnet, dass**
das 6-Gang-Schaltgetriebe als Handschaltgetriebe (100) ausgeführt ist, bei dem auf der ersten Zwischenwelle (20) die Losräder (21-24) in der Reihenfolge 1 - 2 - 3 - 4, die Schaltvorrichtungen (28, 29) mit den Schaltpaaren 1./2. Gang und 3./4. Gang, und auf der zweiten Zwischenwelle (30) die Schaltvorrichtungen (38, 39) mit dem einzeln geschalteten Rückwärtsgang R und dem Schaltpaar 5./6 Gang angeordnet sind.

4. 6-Gang-Schaltgetriebe nach Anspruch 2 und 3,
**dadurch gekennzeichnet, dass**
die Gangzahnräder auf der Getriebeeingangswelle (110) vom Motor aus gesehen die Reihenfolge 1 - 2 - 5 - 3 - 4/6 aufweisen.

5. 6-Gang Schaltgetriebe nach Anspruch 1
**dadurch gekennzeichnet, dass**
das 6-Gang-Schaltgetriebe als automatisiertes Handschaltgetriebe (200) ausgeführt ist, bei dem auf der ersten Zwischenwelle (20) die Losräder (21-24) in der Reihenfolge 1 - 3- 2 - 4, die Schaltvorrichtungen (28, 29) mit den Schaltpaaren 1./3. Gang und 2./4. Gang, und auf der zweiten Zwischenwelle (30) die Schaltvorrichtungen (38, 39) mit dem Schaltpaar R/5. Gang und dem einzeln geschalteten 6. Gang angeordnet sind.

6. 6-Gang-Schaltgetriebe nach Anspruch 2 und 5,
**dadurch gekennzeichnet, dass**
die Gangzahnräder auf der Getriebeeingangswelle (210) vom Motor aus gesehen die Reihenfolge 1 - 3 - 5 - 2 - 4/6 aufweisen.

7. 6-Gang-Schaltgetriebe nach Anspruch 1,
**dadurch gekennzeichnet, dass**
das 6-Gang-Schaltgetriebe als Lastschaltgetriebe (300) ausgeführt ist, wobei auf der ersten Getriebeeingangswelle (310) die Gangzahnräder für den 1. Gang, 3. Gang und 5. Gang angeordnet sind, wobei auf der zweiten Getriebeeingangswelle (320) die Gangzahnräder für den 2. Gang, 4. Gang und 6. Gang angeordnet sind, wobei auf der ersten Zwischenwelle (20) die Losräder (21-24) in der Reihenfolge 1 - 3-2 - 4 und die Schaltvorrichtungen (28, 29) mit den Schaltpaaren 1./3. Gang und 2./4. Gang angeordnet sind, und wobei auf der zweiten Zwischenwelle (30) die Schaltvorrichtungen (38, 39) mit dem Schaltpaar R/5. Gang und dem einzeln geschalteten 6. Gang angeordnet sind.

8. 6-Gang-Schaltgetriebe nach einem der vorhergehenden Ansprüche,
**dadurch gekennzeichnet, dass**
das auf der zweiten Zwischenwelle (30) angeordnete Losrad des Rückwärtsganges (37) mit einem Zwischenzahnrad (27), welches lose auf der ersten Zwischenwelle (20) angeordnet und drehfest mit dem Losrad des 1. Ganges (21) verbunden ist, kämmt.

9. 6-Gang-Schaltgetriebe nach Anspruch 1,
**dadurch gekennzeichnet, dass**
das Ringzahnrad (44) und ein Schraubflansch (47) der Abtriebswelle (40) Vorrichtungen aufweisen, die sowohl eine motorseitige als auch eine motorabgewandte Anordnung des Ringzahnrades (44) am Schraubflansch (47) ermöglichen.

10. Verwendung von gleichen Bauteilen in mindestens zwei Versionen eines 6-Gang Schaltgetriebes für Kraftfahrzeuge, wobei die Getriebeversionen ein Handschaltgetriebe (100), ein automatisiertes Handschaltgetriebe (200) und ein Lastschaltgetriebe (300) beinhalten, und das Getriebe eine Getriebeeingangswelle bzw. zwei Getriebeeingangswellen (110, 210, 310, 320) aufweist, auf denen Gangzahnräder drehstarr angeordnet sind, eine erste Zwischenwelle (20), auf der mit den Gangzahnrädern kämmende Losräder (21-24) für die Gänge 1 bis 4 und ein drehstarr angeordnetes Abtriebszahnrad (41) angeordnet sind, eine zweite Zwischenwelle (30), auf der mit den Gangzahnrädern kämmende Losräder (35, 36) für die Gänge 5 und 6, ein Losrad (37) für den Rückwärtsgang R und ein drehstarr verbundenes Abtriebszahnrad (42) angeordnet sind bei einer Reihenfolge der Losräder von R - 5 - 6, mit Schaltvorrichtungen (28, 29, 38, 39) zur drehstarren Verbindung der Losräder mit den Zwischenwellen, und eine Getriebeausgangswelle (40) mit einem Ringzahnrad (44), welches mit den beiden Abtriebszahnrädern (41, 42) der beiden Zwischenwellen (20, 30) in getrieblicher Verbindung steht, aufweist, wobei
folgende gleiche Bauteile verwendet werden: Losräder (21-24) für den 1. bis 4. Gang und erste Zwischenwelle (20).

11. Verwendung von gleichen Bauteilen nach Anspruch 10,
**gekennzeichnet durch** folgende weitere gleiche Bauteile:
Losräder (35, 36) für den 5. und 6. Gang und zweite Zwischenwelle (30).

12. Verwendung von gleichen Bauteilen nach Anspruch 10,
**gekennzeichnet durch** folgende weitere gleiche Bauteile:
Losrad (37) des Rückwärtsganges.

13. Verwendung von gleichen Bauteilen nach Anspruch 10,
**gekennzeichnet durch** folgende weitere gleiche Bauteile:
Mindestens eine der Schaltvorrichtungen (28, 29, 38, 39) auf der ersten oder der zweiten Zwischenwelle (20, 30).

14. Verwendung von gleichen Bauteilen nach Anspruch 10,
**gekennzeichnet durch** folgende weitere gleiche Bauteile:
Abtriebswelle (40) mit Differentialgetriebe (45) und Ringzahnrad (44), wobei das Ringzahnrad (44) motorseitig oder motorabgewandt an einem Schraubflansch (47) angeordnet sein kann.

## Claims

1. Six speed transmission for motor vehicles with a gear input shaft or two gear input shafts (110, 210, 310, 320), on which gear wheels are arranged in a rotationally rigid way, with a first intermediate shaft (20), on which loose wheels (21 - 24) for the gears 1 to 4 engaging with the gear wheels and a rotationally rigidly arranged output gear wheel (41) are arranged, with a second intermediate shaft (30), on which loose wheels (35, 36) for the gears 5 and 6 engaging with the gear wheels, a loose wheel (37) for the reverse gear R and a rotationally rigidly connected output gear wheel (42) are arranged with a sequence of the loose wheels of R - 5 - 6, with shift devices (28, 29, 38, 39) for the rotationally rigid connection of the loose wheels with the intermediate shafts, and with a gear output shaft (40) with a ring gear wheel (44), which is in gearing connection with the two output gear wheels (41, 42) of the two intermediate shafts (20, 30),
**characterised in that**
the loose wheels (22 and 23) for the 2nd gear and the 3rd gear can be interchanged with each other on the first intermediate shaft (20) and the associated gear wheels are accordingly arranged on the gear input shaft(s), wherein the interchangeable loose wheels (22, 23) have the same shift spline and similar dimensions, whereby the loose wheels for the gears 1 to 4 on the first intermediate shaft (20) can be arranged either in the sequence 1 - 2 - 3 - 4 or in the sequence 1 - 3 - 2 - 4.

2. Six speed transmission according to Claim 1,
**characterised in that**
the loose wheel (35) for the 5th gear on the second intermediate shaft (30) with a sliding spline (64) can be arranged towards the loose wheel of the reverse gear (37) in a shift device (38) as shift pair 5th/R or to the left towards the loose wheel (36) of the 6th gear in a shift device (39) as shift pair 5th/6th.

3. Six speed transmission according to Claim 1,
**characterised in that**
the six speed transmission is designed as a manual transmission (100), wherein on the first intermediate shaft (20) the loose wheels (21 - 24) are arranged in the sequence 1 - 2 - 3 - 4, the shift devices (28, 29) with the shift pairs 1st/2nd gear and 3rd/4th gear, and on the second intermediate shaft (30) the shift devices (38, 39) are arranged with the individually shifted reverse gear and the shift pair 5th/6th gear.

4. Six speed transmission according to Claim 2 and 3,
**characterised in that**
the gear wheels on the gear input shaft (110), as seen from the engine, have the sequence 1 - 2 - 5 - 3 - 4/6.

5. Six speed transmission according to Claim 1,
**characterised in that**
the six speed transmission is designed as an automated manual transmission (200), wherein on the first intermediate shaft (20) the loose wheels (21 - 24) are arranged in the sequence 1 - 3 - 2 - 4, the shift devices (28, 29) with the shift pairs 1st/3rd gear and 2nd/4th gear, and on the second intermediate shaft (30) the shift devices (38, 39) are arranged with the shift pair R/5th gear and the individually shifted 6th gear.

6. Six speed transmission according to Claims 2 and 5,
**characterised in that**
the gear wheels on the gear input shaft (210), as seen from the engine, have the sequence 1 - 3 - 5 - 2 - 4/6.

7. Six speed transmission according to Claim 1,
**characterised in that**
the six speed transmission is designed as a load transmission (300), wherein on the first gear input shaft (310) the gear wheels for the 1st gear, 3rd gear and 5th gear are arranged, wherein on the second gear input shaft (320) the gear wheels for the 2nd gear, 4th gear and 6th gear are arranged, wherein on the first intermediate shaft (20) the loose wheels (21 - 24) are arranged in the sequence 1 - 3 - 2 - 4 and the shift devices (28, 29) with the shift pairs 1st/3rd gear and 2nd/4th gear, and wherein on the second intermediate shaft (30) the shift devices (38, 39) are arranged with the shift pair R/5th gear and the individually shifted 6th gear.

8. Six speed transmission according to any of the preceding claims,
**characterised in that**
the loose wheel of the reverse gear (37) arranged on the second intermediate shaft (30) engages with an intermediate gear wheel (27) which is arranged loose on the first intermediate shaft (20) and is connected in a rotationally secure way with the loose wheel of the 1st gear (21).

9. Six speed transmission according to Claim 1,
**characterised in that**
the ring gear wheel (44) and a screwed flange (47) of the output shaft (40) have devices which facilitate the arrangement both on the engine side and on the side turned away from the engine of the ring gear wheel (44) on the screwed flange (47).

10. Use of the same components in at least two versions of a six speed transmission for motor vehicles, wherein the versions comprise a manual transmission (100), an automated manual transmission (200) and a load transmission (300), and the gear has one or two gear input shafts (110, 210, 310, 320), on which gear wheels are arranged in a rotationally rigid way, a first intermediate shaft (20), on which loose wheels (21 - 24) for the gears 1 to 4 engaging with the gear wheels and a rotationally rigidly arranged output gear wheel (41) are arranged, a second intermediate shaft (30), on which loose wheels (35, 36) for the 5th and 6th gears engaging with the gear wheels, a loose wheel (37) for the reverse gear (R) and a rotationally rigidly connected output gear wheel (42) are arranged with a sequence of the loose wheels of R - 5 - 6, with shift devices (28, 29, 38, 39) for the rotationally rigid connection of the loose wheels with the intermediate shafts, and a gear output shaft (40) with a ring gear wheel (44), which is in gearing connection with the two output gear wheels (41, 42) of the two intermediate shafts (20, 30), wherein
the following same components are used: loose wheels (21 - 24 for the 1st to 4th gear and first intermediate shaft (20).

11. Use of the same components according to Claim 10,
**characterised by** the additional same components as follows: loose wheels (35, 36) for the 5th and 6th gear and second intermediate shaft (30).

12. Use of the same components according to Claim 10,
**characterised by** the additional same components as follows: loose wheel (37) of the reverse gear.

13. Use of the same components according to Claim 10,
**characterised by** additional same components as follows: at least one of the shift devices (28, 29, 38, 39) on the first or the second intermediate shaft (20, 30).

14. Use of the same components according to Claim 10,
**characterised** through additional same components as follows: output shaft (40) with differential gear (45) and ring gear wheel (44), wherein the ring gear wheel (44) on the engine side or turned away from the engine can be arranged on a screwed flange (47).

## Revendications

1. Boîte à 6 vitesses pour véhicules automobiles avec un arbre primaire de boîte de vitesses ou deux arbres primaires de boîte (110, 210, 310, 320), sur lequel ou lesquels des roues dentées de vitesse sont disposées de façon rigide en torsion, avec un premier arbre intermédiaire (20), sur lequel sont disposés des roues mobiles ou folles (21-24) s'engrenant avec les roues dentées de vitesse pour les vitesses 1 à 4 et une roue dentée de sortie (41) disposée de façon rigide en torsion, avec un deuxième arbre intermédiaire (30), sur lequel sont disposées des roues mobiles ou folles (35, 36) s'engrenant avec les roues dentées pour les vitesses 5 et 6, une roue mobile ou folle (37) pour la marche arrière R et une roue dentée de sortie (42) reliée de façon résistante à la torsion avec un ordre de succession des roues mobiles R-5-6, avec des dispositifs de commande de changement de vitesse (28, 29, 38, 39) pour la liaison rigide en torsion entre les roues mobiles ou folles et les arbres intermédiaires, et avec un arbre de sortie de boîte de vitesses (40) avec une roue dentée annulaire (44), laquelle est en liaison par transmission avec les deux roues dentées de sortie (41, 42) des deux arbres intermédiaires (20, 30),
**caractérisée en ce que**
les roues mobiles ou folles (22 et 23) pour la 2è et la 3è vitesses sur le premier arbre intermédiaire sont permutables ou interchangeables entre elles, et les roues dentées de vitesse associées sont disposées de manière correspondante sur l'arbre/les arbres primaires de boîte de vitesses, les roues mobiles ou folles (22, 23) interchangeables présentant la même denture de commande de changement de vitesse et des dimensions identiques, ce qui fait que les roues mobiles ou folles pour les vitesses 1 à 4 sur le premier arbre intermédiaire (20) peuvent être disposées soit dans l'ordre de succession 1-2-3-4 soit dans l'ordre de succession 1-3-2-4.

2. Boite à 6 vitesses selon la revendication 1,
**caractérisé en ce que** la roue mobile (35) pour la 5è vitesse peut être disposée sur le deuxième arbre intermédiaire (30) avec une denture coulissante (64) en direction de la roue mobile ou folle de la marche arrière (37) dans un dispositif de commande (38) comme couple de commande 5^{ème}/R ou vers la gauche en direction de la roue mobile ou folle (36) de la 6è vitesse dans un dispositif de commande (39) comme couple de commande 5^{ème}/6^{ème}.

3. Boîte à 6 vitesses selon la revendication 1,
**caractérisée en ce que** la boîte à 6 vitesses est conçue comme une boîte à commande manuelle (100), pour laquelle sont disposées sur le premier arbre intermédiaire (20), les roues mobiles ou folles (21-24) dans l'ordre 1-2-3-4, les dispositifs de commande (28, 29) avec les couples de commande 1è/2è vitesses et 3è/4è vitesses et les dispositifs de commande (38, 39) avec la marche arrière R commandée individuellement et le couple de commande 5è/6è vitesses sont disposés sur le deuxième arbre de vitesse (30).

4. Boîte à 6 vitesses selon les revendications 2 et 3, **caractérisée en ce que** les roues dentées de vitesse sur l'arbre primaire de boîte (110) présentent l'ordre de succession 1-2-5-3-4/6 vu à partir du moteur.

5. Boîte à 6 vitesses selon la revendication 1, **caractérisée en ce que** la boîte à 6 vitesses est réalisée sous la forme d'une boîte automatisée à commande manuelle (200), dans laquelle sont disposées sur le premier arbre intermédiaire (20) les roues mobiles ou folles (21-24) dans l'ordre 1-3-2-4, les dispositifs de commande (28, 29) avec les couples de commande 1^{ère}/3^{ème} et 2^{ème}/4^{ème} et, sur le deuxième arbre intermédiaire (30), les dispositifs de commande (38, 39) avec le couple de commande R/5^{ème} et la 6^{ème} vitesse commandée individuellement.

6. Boîte à 6 vitesses selon les revendications 2 et 5,**caractérisé en ce que** les roues dentées de vitesse sur l'arbre primaire de boîte de vitesses (210) présentent à partir du moteur l'ordre de succession 1-3-5-2-4/6.

7. Boîte à 6 vitesses selon la revendication 1, **caractérisée en ce que** la boîte à 6 vitesses est conçue comme une boîte commandée en charge (300), les roues dentées pour la 1è vitesse, la 3è vitesse et la 5è vitesse étant disposées sur le premier arbre primaire de boîte de vitesses (310), les roues dentées pour la 2è vitesse, la 4è vitesse et la 6è vitesse étant disposées sur le deuxième arbre primaire de boîte (320), les roues mobiles ou folles (21-24) dans l'ordre 1-3-2-4 et les dispositifs de commande (28, 29) avec les couples de commande 1^{ère}/3^{ème} et 2^{ème}/4^{ème} étant disposés sur le premier arbre intermédiaire (20) et les dispositifs de commande (38, 39)avec le couple de commande R/5^{ème} vitesse et la 6^{ème} vitesse commandée individuellement étant disposés sur le deuxième arbre intermédiaire (30).

8. Boîte à 6 vitesses selon l'une quelconque des revendications précédentes, **caractérisée en ce que** la roue mobile ou folle de la marche arrière (37), qui est disposée sur le deuxième arbre intermédiaire (30) s'engrène avec une roue dentée intermédiaire (27), laquelle est disposée de façon mobile ou folle sur le premier arbre intermédiaire, et est reliée de façon rigide en torsion à la roue mobile de la 1^{ère} vitesse.

9. Boîte à 6 vitesses selon la revendication 1, **caractérisée en ce que** la roue dentée annulaire (44) et une bride à vis (47) de l'arbre de sortie (40) présentent des dispositifs qui permettent aussi bien une disposition côté moteur qu'une disposition opposée au moteur de la roue dentée annulaire (44) sur la bride à vis (47).

10. Utilisation de composants identiques dans au moins deux versions d'une boîte à 6 vitesses pour véhicules automobiles, les versions de boîte incluant une boîte classique à commande manuelle (100), une boîte classique automatisée (200) et une boîte commandée en charge (300), et la boîte présentant un ou deux arbres primaires (110, 210, 310, 320), sur lesquels des roues dentées de vitesse sont disposées de façon rigide en torsion, un premier arbre intermédiaire (20), sur lequel sont disposées des roues dentées mobiles ou folles (21-24) s'engrenant avec les roues dentées de vitesse pour les vitesses 1 à 4 et une roue dentée de sortie (41) disposée de façon rigide en torsion, un deuxième arbre intermédiaire (30), sur lequel sont disposées des roues mobiles ou folles (35-36) s'engrenant avec les roues dentées de vitesse pour les vitesses 5 et 6 une roue mobile ou folle (37) pour la marche arrière R et une roue dentée de sortie (42) reliée de façon rigide en torsion pour un ordre de succession des roues mobiles R-5-6, avec des dispositifs de commande de changement de vitesse (28, 29, 38, 39) pour la liaison rigide en torsion des roues mobiles ou folles avec les arbres intermédiaires, et un arbre de sortie de vitesses (40) avec une roue dentée annulaire (44), laquelle est en liaison d'entraînement avec les deux roues dentées de sortie (41, 42) des deux arbres intermédiaires (20, 30), en utilisant les composants identiques suivants : roues mobiles ou folles (21-24) pour les 1^{ère} jusqu'à la 4^{ème} vitesses et un premier arbre intermédiaire (20).

11. Utilisation de composants identiques selon la revendication 10, **caractérisée par** les autres composants identiques suivants : roues mobiles ou folles (35, 36) pour les 5^{ème} . et 6^{ème} vitesses et deuxième arbre intermédiaire.

12. Utilisation de composants identiques selon la revendication 10, **caractérisé par** les autres composants identiques ci-après : roue mobile ou folle (37) de la marche arrière.

13. Utilisation de composants identiques selon la revendication 10, **caractérisé par** les autres composants identiques ci-après : au moins l'un des dispositifs de commande de changement de vitesse (28, 29, 38, 39) sur le premier ou le deuxième arbre intermédiaire (20, 30).

14. Utilisation de composants identiques selon la revendication 10, **caractérisée par** les autres composants identiques ci-après : arbre de sortie (40) avec différentiel (45) et roue dentée annulaire (44), la roue dentée annulaire (44) pouvant être disposée côté moteur ou de façon opposée au moteur sur une bride à vis (47).
